# EUROPÄISCHE PATENTSCHRIFT

(11) **EP 2 511 204 B1**
(45) Veröffentlichungstag und Bekanntmachung des Hinweises auf die Patenterteilung: **22.10.2014**
(21) Anmeldenummer: 12001638.1
(22) Anmeldetag: 09.03.2012
(51) Int. Cl.: B65G 47/46, B65G 47/51, B65G 57/03, B07C 3/06

(54) **Palettieranlage für Getränkekästen umfassend mindestens eine Zuführbahn**
Palletising assembly for drink crates comprising at least one conveyor belt
Installation de palettisation pour caisses de boissons comprenant au moins une bande

(30) Priorität: 14.04.2011 DE 102011017111
(43) Veröffentlichungstag der Anmeldung: 17.10.2012
(73) Patentinhaber: recop electronic GmbH, 34123 Kassel (DE)
(72) Erfinder: Oppermann, Knut, 34123 Kassel (DE)
(74) Vertreter: Walther, Walther & Hinz GbR

(56) Entgegenhaltungen:
- EP-A1- 1 864 923
- WO-A1-99/21663
- WO-A2-2011/038442
- DE-A1- 4 136 253
- US-A- 2 728 466
- US-A- 3 361 247
- US-A- 4 022 334
- US-A- 4 239 434
- US-A1- 2003 094 347
- US-A1- 2007 075 000
- US-A1- 2010 284 775

## Beschreibung

Die Erfindung betrifft ein Verfahren zum Betrieb einer Palettieranlage für Getränkekästen umfassend mindestens eine Zuführbahn.

Aus der US 3,361,247 A ist ein Sortiersystem für unterschiedliche Artikel bekannt, der den nächstliegenden Stand der Technik beschreibt. Das Sortiersystem umfasst eine Zuführbahn, auf der die Artikel zugeführt werden. Nach Erkennung der Artikel auf der Zuführbahn werden die Artikel bei Betätigung entsprechender Ausschleuser auf die für diesen Artikel vorgesehene Kammbahn ausgeschleust. Darüber hinaus ist eine Pufferbahn vorgesehen, die im Kreislauf mit der Zuführbahn steht. Die Anbindung der Pufferbahn, auf die auch neue Artikel aufgegeben werden, erfolgt einerseits örtlich vor der Erkennung der Artikel und andererseits nach der letzten Kammbahn. Eine Palettierstation, die sich an die Kammbahnen anschließt, ist nicht vorgesehen.

Palettieranlagen sind aus dem Stand der Technik bekannt. Solche Palettieranlagen werden häufig im Getränkegroßhandel eingesetzt oder in Abfüllanlagen, in denen eine sortenreine Palettierung von Getränkekästen vorgenommen werden soll. Der Rücklauf der einzelnen Leergutgetränkekästen aus den Verkaufsstellen erfolgt vollständig durchmischt. Vor der eigentlichen Wiederbefüllung, d. h. vor dem Transport der Leergutkästen zu den Abfüllbetrieben und Brauereien muss die Sortierung der Leergutkästen sortenrein erfolgen, wobei die Leergutkästen auf Paletten den entsprechenden Abfüllbetrieben oder Brauereien übergeben werden. Bei der Sortierung der Leergutkästen wird unterschieden nach A-, B-, C-Kästen, wobei die A-Kästen das höchste Aufkommen haben und die C-Kästen das geringste Aufkommen. Für die sortenreine Palettierung von Leergutkästen ist insofern eine Palettieranlage bekannt, bei der eine Zuführbahn vorgesehen ist, auf der die einzelnen Kästen unsortiert zugeführt werden. An die Zuführbahn schließt sich eine Abführbahn an. Auf der Zuführbahn befinden sich beabstandet zueinander eine Mehrzahl von Ausschleusern (EP 1 609 747 A1), wobei sich an die Ausschleuser sogenannte Kammbahnen anschließen. Die Kammbahnen sind endseitig durch eine Verbindungsbahn verbunden, wobei endseitig an der Verbindungsbahn eine Palettierstation mit einem Palettierer angeordnet ist. Die auf jeder Kammbahn aufstehenden Kästen werden, wenn die Kammbahn genügend Kästen für eine Palette aufgenommen hat, von der Palettierstation abgerufen und in der Palettierstation durch einen Palettierkopf palettiert. Hinter der Palettierstation befindet sich üblicherweise ein Speicher für die vollen und leeren Paletten. Zur Palettierung wird nun derart vorgegangen, dass durch die Ausschleuser die Ausschleusung der entsprechenden Leergutkästen sortenrein auf die entsprechende Kammbahn erfolgt. Das heißt, auf jeder Kammbahn befindet sich eine Anzahl von sortenreinen Leergutkästen. Die Kammbahnen haben eine Kapazität an Kästen, die mindestens der Anzahl einer vollen Palette entspricht. Insofern beträgt die Länge der Kammbahn, auch Staubahn genannt ca. 18 Meter. Das heißt eine in solcher Weise aufgebaute Palettieranlage hat einen extrem hohen Platzbedarf. Insofern ist auch bereits bekannt eine Palettieranlage zweigeschossig aufzubauen, wobei die Staubahnen auf einem Zwischenboden angeordnet sind. Hierdurch wird zwar der Platzbedarf erheblich reduziert, jedoch sind solche Konstruktionen teuer.

Die der Erfindung zugrunde liegende Aufgabe besteht demzufolge darin, ein Verfahren zum Betrieb einer Palettieranlage bereitzustellen, um auf einer Ebene einen gegenüber dem Stand der Technik wesentlich geringeren Platzbedarf verwirklichen zu können.

Diese Aufgabe wird durch das erfindungsgemäße Verfahren nach Anspruch 1 gelöst.

Ein Verfahren zum Betrieb einer Palettieranlage für Getränkekästen, umfassend mindestens eine Zuführbahn, die einen gegenüber dem Stand der Technik erheblich geringeren Platzbedarf aufweist, zeichnet sich im Einzelnen dadurch aus, dass die Zuführbahn der Palettieranlage mindestens eine Erkennungseinrichtung für die Getränkekästen aufweist, wobei die Zuführbahn in Reihe angeordnet mehrere Ausschleuser aufweist, wobei sich an jeden Ausschleuser eine Ausschleusbahn anschließt, die zu einer Palettierstation führt, wo durch einen Palettierkopf die lagenweise Beladung einer Palette mit Getränkekästen erfolgt, wobei die mindestens eine Zuführbahn mit mindestens einer Pufferbahn im Kreislauf verbunden ist, wobei die Anbindung der mindestens einen Pufferbahn an die Zuführbahn in Transportrichtung der Getränkekästen gesehen einerseits vor der Erkennungseinrichtung erfolgt und andererseits nach dem letzten Ausschleuser mit angeschlossener Ausschleusbahn zur Palettierstation, wobei sich an die Zuführbahn eine Abführbahn für Getränkekästen anschließt. Hierbei erfolgt bei einer Mehrzahl von auf der Zuführbahn ankommenden Getränkekästen unterschiedlicher Sorte durch die Erkennungseinrichtung die Erkennung der einzelnen Getränkekästen. In der mit einem Speicher versehenen Rechnereinheit der Erkennungseinrichtung wird die Reihenfolge und ggf. auch der Abstand der Kästen zueinander abgespeichert, so dass bekannt ist, welcher Kasten sich zu welchem Zeitpunkt wo auf der Zuführbahn und gegebenenfalls der Pufferbahn befindet. Die Ausschleuser selbst stehen ebenfalls mit der Erkennungseinrichtung bzw. der Rechnereinheit in Verbindung, um bei entsprechenden Signal durch die Rechnereinheit den gewünschten Kasten auszuschleusen. Der Ausschleusvorgang erfolgt immer dann, wenn durch die Erkennungseinrichtung mindestens die Anzahl von Kästen einer Sorte auf der Zuführbahn und auf der Pufferbahn erkannt worden ist, die erforderlich ist, um eine vollständige Palettenlage zu bilden, d. h. eine Palette mit einer vollständigen Lage an Kästen zu belegen. Es wurde bereits an anderer Stelle dargelegt, dass sich an die Zuführbahn nach dem letzten Ausschleuser für die mindestens eine Pufferbahn eine Abführbahn anschließt, wobei auf der Abführbahn die Kästen ablaufen, die nicht palettiert werden, d. h. es werden der mindestens einen Pufferbahn nur die Kästen zugeführt, die auch palettiert werden. Dies immer vor dem Hintergrund, dass der eigentliche Ausschleusvorgang einer Kastensorte durch einen oder mehrere Ausschleuser auf die entsprechende Ausschleusbahn nur dann erfolgt, wenn sich im System, d. h. auf der Zuführbahn und auf der Pufferbahn zumindest einmal die Anzahl der Kästen befindet, die erforderlich ist, um eine Palettenlage zu bilden. Ist die Anzahl der Kästen für eine Palettenlage nicht erreicht, dann werden diese Getränkekästen solange im Kreis geführt, bis entsprechend neue Kisten auf der Zuführbahn zugeführt worden sind, mit denen eine Lage gebildet werden kann. Es sei an dieser Stelle noch einmal daran erinnert, dass die Erkennungseinrichtung im Rahmen einer sogenannten Kastenverwaltung durchaus weiß, wie viele Kästen einer bestimmten Sorte sich noch auf der Zuführbahn bzw. auf der Pufferbahn befinden.

Die genaue Ortsbestimmung für den jeweiligen Kasten auf der Zuführbahn erfolgt dadurch, dass der Transport der Kästen auf der Zuführbahn als wegsynchroner Signaltransport erfolgt, d. h. die Zuführbahn wird nach Art eines Schieberegisters gesteuert. Auf der Pufferbahn erfolgt der Transport der Kästen nach dem FIFO-Prinzip (first in - first out).

Es wurde bereits darauf hingewiesen, dass die Pufferbahn im Bereich der Erkennungseinrichtung einen Einschleuser aufweist, der die Einschleusung der auf der mindestens einen Pufferbahn anstehenden Kästen auf die Zuführbahn vornimmt. Der Einschleuser steht hierbei mit der Erkennungseinrichtung in Verbindung, wobei die Erkennungseinrichtung weiß, in welcher Reihenfolge die entsprechenden Kästen am Einschleuser anstehen. Entsprechend ist der Erkennungseinrichtung auch bekannt, wie viel Kästen von welcher Sorte sich auf der Pufferbahn befinden. Es wurde bereits verschiedentlich erwähnt, dass die Ausschleusung von Getränkekästen von der Zuführbahn auf die Aufschleusbahn nur dann erfolgt, wenn die Anzahl der Kästen dieser Sorte auf der Zuführbahn und der mindestens einen Pufferbahn mindestens der Anzahl der Kästen entspricht, die erforderlich ist, um genau eine Palettenlage zu bilden. Das heißt, dass durch den Einschleuser bzw. die Erkennungseinrichtung, die mit dem Einschleuser datentechnisch in Verbindung steht, immer dann das Signal zum Einschleusen der Kästen geben wird, wenn die Anzahl der auf der Zuführbahn neu zugeführten Kästen dieser Sorte zzgl. der Kästen auf der entsprechenden Sorte auf der Pufferbahn genau der Anzahl der Kästen entspricht, die erforderlich sind, um eine vollständige Palettenlage an Kästen zu bilden.

Der Kern der Erfindung besteht ganz offensichtlich darin, dass zum einen in der Palettierstation eine lagenweise Beladung einer Palette mit Getränkekästen erfolgt, und wobei zum anderen durch die mindestens eine Pufferbahn ein Puffer für Getränkekästen bis zur Anzahl einer Lage auf einer Palette gebildet wird, wobei der Puffer nach dem Stand der Technik durch die Vielzahl an Kamm- oder Staubahnen gebildet wird, an deren Ende sich die jeweilige Palettierstation befindet.

Weitere vorteilhafte Merkmale und Ausbildungen der Erfindung ergeben sich aus den Unteransprüchen.

So ist nach einem besonderen Merkmal der Erfindung vorgesehen, dass die Erkennungseinrichtung zur Erkennung der Getränkekästen eine Rechnereinheit mit einem Speicher zur Verwaltung der Getränkekästen in der Palettieranlage aufweist. Hieraus wird deutlich, dass die Erkennungseinrichtung nicht nur der Erkennung der Getränkekästen dient, sondern dass in einer Rechnereinheit mit einem angeschlossenen Speicher auch hinterlegt ist, in welcher Reihenfolge die einzelnen Kästen auf der Zuführbahn laufen. Da die Ausschleuser mit der Erkennungseinrichtung in Verbindung stehen, erhält somit der Ausschleuser bei Passieren des entsprechenden Getränkekastens ein Signal zum Ausschleusen dieses Getränkekastens, oder aber ein Signal, den Getränkekasten passieren zu lassen. Nach dem durch den Ausschleuser vorgenommenen Ausschleusvorgang des Getränkekastens von der Zuführbahn auf die Ausschleusbahn erreicht der Kasten die Palettierstation. Die Palettierstation weist eine Gruppierstation zur lagenweisen Gruppierung von Getränkekästen im Bereich des Palettierkopfes auf. Im Einzelnen umfasst die Gruppierstation eine sich an die Anschlussbahn anschließende Auflaufbahn sowie einen Gruppiertisch. Die auf der Auflaufbahn anstehenden Kästen werden hierbei durch eine Verschiebereinrichtung von der Auflaufbahn auf den Gruppiertisch überführt, wobei der Gruppiertisch eine Größe von mindestens der Grundfläche einer Palette aufweist, so dass auf dem Gruppiertisch dann, wenn sich dort eine Anzahl von Kästen in der Größe einer Palettenlage befindet, durch den Palettierkopf diese Anzahl von Kästen auf der Palette abgestellt wird. Das heißt, dass die Palette durch den Palettierkopf vom Gruppiertisch lagenweise beladen wird. Die Lagerung der zu beladenden Paletten erfolgt auf mindestens einem Palettenbeladeplatz, der der Gruppierstation zugeordnet ist. Dem Palettenbeladeplatz ist des Weiteren ein Palettenspeicher nachgeordnet, der der Aufnahme von vollen Paletten dient.

Die mindestens eine Pufferbahn verläuft im Wesentlichen parallel zur Zuführbahn aber quer zu den Ausschleusbahnen; hierdurch wird eine platzsparende Bauweise der Palettieranlage verwirklicht. Bedient wird die Pufferbahn ebenfalls durch einen oder mehrere Ausschleuser, die in Transportrichtung der Kästen, den Ausschleusern mit den den angeschlossenen Ausschleusbahnen nachgeordnet sind. Insofern ist der Erkennungseinrichtung nicht nur bekannt, wie viel Kästen von welcher Sorte auf die Ausschleusbahnen ausgeschleust wurden, sie "weiß" darüber hinaus, welche Kästen sich in welcher Reihenfolge auf der Pufferbahn befinden.

Es wurde bereits dargelegt, dass die Pufferbahn im Kreislauf mit der Zuführbahn verbunden ist. Das heißt, dass am Ende der Zuführbahn durch einen Ausschleuser die Kästen falls erforderlich auf die Pufferbahn überführt werden, und am vorderen Ende, das heißt in Transportrichtung der Kästen gesehen vor der Erkennungseinrichtung der Zuführbahn wieder zugeführt werden. Vor dem Übergang von der Pufferbahn zur Zuführbahn ist ein Einschleuser vorgesehen, wobei der Einschleuser ebenfalls mit der Erkennungseinrichtung in Verbindung steht. Ein solcher Einschleuser ist erforderlich, da die Einschleusung von Kästen von der Pufferbahn auf die Zuführbahn nur zu Momenten erfolgen kann, in der a) die Zuführbahn frei ist und b) die Kästen auf der Pufferbahn benötigt werden um von zumindest einer Lage eine Palette in einer Palettierstation zu beladen. Zumindest muss eine Sorte der Kästen auf der Pufferbahn gegebenenfalls in Verbindung mit neuen Kästen auf der Zuführbahn eine Palettenlage ergeben. Nach dem Ausschleuser auf der Zuführbahn, der für die Ausschleusung der Kästen auf die mindestens eine Pufferbahn zuständig ist, befindet sich die Abführbahn. Auf der Abführbahn werden Getränkekästen abgeführt, die, aus welchen Gründen auch immer, nicht palettiert werden.

Anhand der Zeichnungen wird die Erfindung nachstehend beispielhaft näher erläutert.
- Fig. 1: zeigt schematisch die Palettieranlage nach dem Stand der Technik;
- Fig. 2: zeigt die erfindungsgemäße Palettieranlage in schematischer Darstellung.

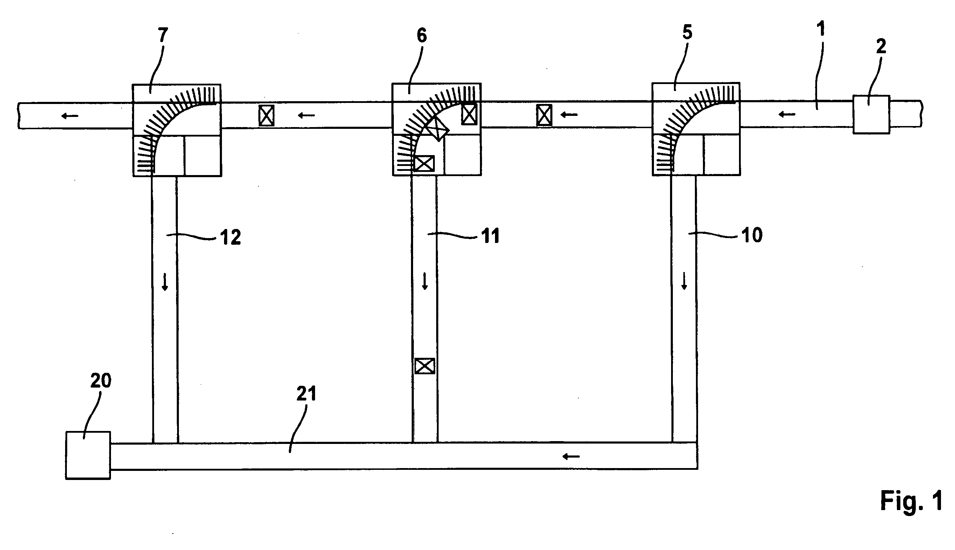

Bei der in Fig. 1 dargestellten Palettieranlage nach dem Stand der Technik ist eine Zuführbahn 1 vorgesehen, wobei sich im Bereich der Zuführbahn 1 eine Erkennungseinrichtung 2 befindet. Durch die Erkennungseinrichtung 2 in Verbindung mit einem Rechner mit einer Speichereinheit erfolgt nicht nur die Erkennung der einzelnen Kästen, sondern es ist aufgrund der Ausbildung der Zuführbahn als Schieberegister der Erkennungseinrichtung, die mit den Ausschleusern 5, 6 und 7 in Verbindung steht auch bekannt, welcher Kasten sich zu welcher Zeit an welcher Stelle auf der Zuführbahn befindet. Dies vor dem Hintergrund, dass durch die Ausschleuser 5 bis 7 die Ausschleusung der entsprechenden Kästen vorgenommen werden soll. An die Zuführbahn schließt sich nach dem letzten Ausschleuser 7 die Abführbahn an, auf der solche Kästen abgeführt werden, die nicht palettiert werden sollen. Die Kästen, die palettiert werden werden durch die Ausschleuser 5 bis 7 der jeweiligen Kamm- oder Staubahn 10, 11 und 12 zugeführt. Eine jede Kammbahn 10 bis 12 weist eine Länge auf, die es ermöglicht, soviel Kästen vorzuhalten, wie für die vollständige Beladung einer Palette erforderlich sind. Das heißt, solche Kamm- oder Staubahnen weisen eine Länge von beispielsweise 18 Metern auf. Entsprechend groß ist der Platzbedarf. An die einzelnen Kammbahnen schließt sich endseitig eine die Kammbahnen verbindende Verbindungsbahn 21 mit endseitig angeordneter Palettierstation 20 an. Bei vollständig mit Kästen einer Sorte gefüllten Kamm- oder Staubahn, werden diese Kästen über die Verbindungsbahn der Palettierstation 20 zugeführt. Dort erfolgt die Palettierung dieser Kästen auf der entsprechenden Palette durch den Palettierkopf.

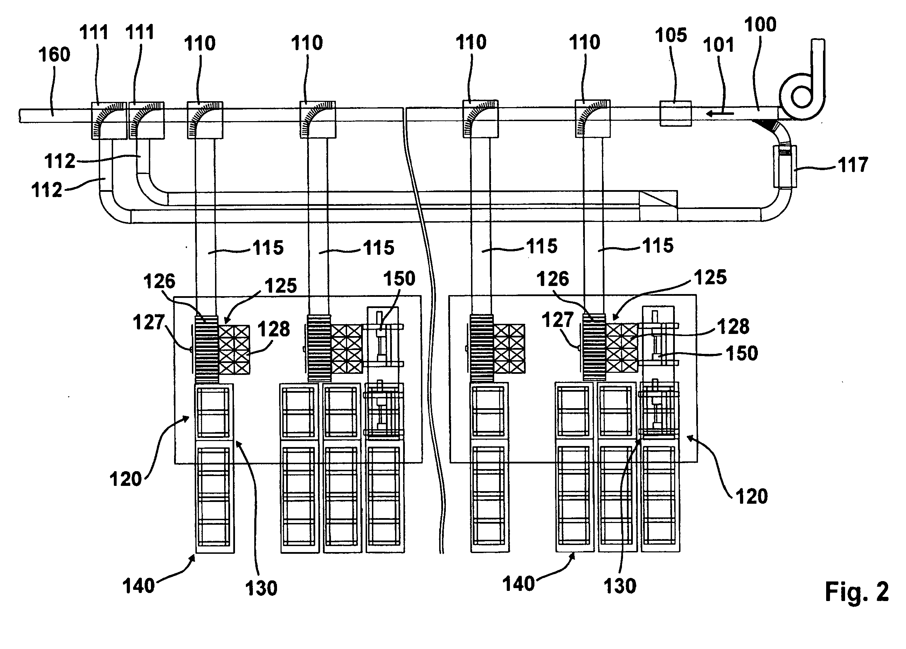

Fig. 2 zeigt schematisch eine Palettieranlage nach der Erfindung. Die Palettieranlage nach der Erfindung umfasst eine Zuführbahn 100, die in Transportrichtung der Kästen (Pfeil 101) zunächst eine Erkennungseinrichtung 105 aufweist, wobei der Erkennungseinrichtung 105 mehrere Ausschleuser 110 auf der Zuführbahn nachgeordnet sind. Durch die Ausschleuser 110 werden auf der Zuführbahn transportierte Kästen auf die jeweilige Ausschleusbahn 115 überführt, wobei am Ende einer jeden Ausschleusbahn 115 eine insgesamt mit 120 bezeichnete Palettierstation vorgesehen ist. Eine solche Palettierstation 120 umfasst eine mit 125 bezeichnete Gruppierstation sowie einen der Gruppierstation nachgelagerten Palettenbeladeplatz 130 dem wiederum ein Palettenspeicher 140 nachgeordnet ist.

Die Gruppierstation 125 umfasst eine unmittelbar an die Ausschleusbahn 115 sich anschließende Auflaufbahn 126, die beispielsweise als Rollenbahn ausgebildet ist, auf der die einzelnen ausgeschleusten Leergutkästen aufstehen. Im Bereich der Auflaufbahn 126 befindet sich eine Verschiebereinrichtung 127, durch die die auf der Auflaufbahn aufstehenden Getränkekästen auf dem Gruppiertisch 128 überführt werden. Der Gruppiertisch 128 hat hierbei eine Größe, die in etwa der Grundfläche einer Palette entspricht, und somit in der Lage ist eine komplette Palettenlage an Kästen aufzunehmen. Im Arbeitsbereich der Palettierstation 120 befindet sich der mit 150 bezeichnete Palettierkopf. Der Palettierkopf entnimmt dem Gruppiertisch 128 die komplette Lage an Kästen, und stellt sie auf eine Palette auf dem Palettenbeladeplatz 130 ab. Der Palettenbeladeplatz 130 weist mehrere Paletten auf, so dass die Palettieranlage insgesamt ein hohes Maß an Flexibilität insofern zeigt, als die einzelnen Einschleuser 117 nicht immer nur eine bestimmte Kastensorte ausschleusen müssen, sondern beispielsweise wie im vorliegenden Fall eine zweite oder eine dritte Kastensorte, die dann auf einer zweiten oder dritten Palette der Palettenbeladestation 130 abgesetzt wird. Wesentlich ist ausschließlich, dass immer genau eine Lage auf dem Gruppiertisch vervollständigt wird, die dann auf der entsprechenden Palette des Palettenbeladeplatzes 130 abgestellt wird. Ist die eine Palette mit der einen Lage einer Getränkekastensorte gefüllt, dann kann die nächste daneben stehende Palette in dem Palettenbeladeplatz 130 durchaus durch den Palettierkopf mit einer Lage an Getränkekästen gefüllt werden, die nicht mit der Kastensorte übereinstimmt, die zuvor der Palettierstation 120 zugeführt worden ist. Auch die hohe Flexibilität die durch dieses Prinzip verwirklicht wird sorgt schlussendlich dafür, dass der Platzbedarf für die gesamte Palettieranlage verhältnismäßig gering gehalten werden kann.

Es wurde bereits darauf hingewiesen, dass die Zuführbahn 100 eine ganze Reihe von in Reihe angeordneten Ausschleusern 110 aufweist; der in Transportrichtung an der Zuführeinrichtung angeordneten Ausschleusern 110 nachgeordnet befinden sich zwei Ausschleuser 111 die jeweils mit einer Pufferbahn 112 zusammen arbeiten. Die beiden Pufferbahnen 112 verlaufen im Wesentlichen parallel zueinander quer zu den Ausschleusbahnen 115. Endseitig vor Erreichen der Zuführbahn 100 werden die beiden Pufferbahnen wieder vereinigt, wobei die Pufferbahn 112 im Bereich des Übergangs zur Zuführbahn 100 in Transportrichtung gesehen vor der Erkennungseinrichtung 105 über einen sogenannten Einschleuser 117 verfügt. Der Einschleuser 117 steht ebenso wie die Ausschleuser 110, 111 in datentechnischer Verbindung mit der Erkennungseinrichtung 105.

Die Funktionsweise der Anlage wird nachstehend wie folgt beschrieben: Auf der Zuführbahn 100 kommen eine Vielzahl von Leergutgetränkekästen unterschiedlicher Sorte an. Die einzelnen Getränkekästen werden bei Passieren der Erkennungseinrichtung 105 erkannt und in Bezug auf ihre Reihenfolge zueinander und auch den Abstand zueinander erfasst. Die Zuführbahn hinter der Erkennungseinrichtung 105 ist als sogenanntes Schieberegister ausgebildet, wobei ein solches Schieberegister einen wegsynchronen Signaltransport der einzelnen auf der Zuführbahn befindlichen Kästen ermöglicht. Geht man für die folgenden Überlegungen nunmehr davon aus, dass sich von einer Kastensorte A sowohl auf der Zuführbahn 100 als auch auf den beiden Pufferbahnen 112 mehr als acht Kästen befinden, wobei vorgegeben wird, dass acht Kästen genau eine Palettenlage bilden, dann werden diese acht Kästen beispielsweise durch den ersten der Ausschleuser 110 auf die Ausschleusbahn 115 ausgeschleust, und in der Palettierstation 120 auf dem Palettenbeladeplatz 130 auf eine Palette übergeben. Nimmt man für einen anderen Fall beispielsweise an, dass sich auf der Pufferbahn 112 vier Kästen der Sorte A befinden, zehn Kästen der Sorte B und wiederum vier Kästen der Sorte C, dann werden in jedem Fall durch den Einschleuser 117 auf der Pufferbahn anstehenden Kästen der Sorte B auf die Zuführbahn eingeschleust, wobei dann die acht Kästen der Sorte B durch den entsprechenden Ausschleuser 110 der entsprechenden Palettierstation 120 zugeführt werden. Sind zwischenzeitlich beispielsweise sechs Kästen der Sorte A über die Zuführbahn nachgeführt worden, so werden diese sechs Kästen, durch den entsprechenden Ausschleuser 110 der entsprechenden Palettierstation 120 zugeführt, wobei für den Fall, dass die bereits von der Pufferbahn auf die Zuführbahn überführten vier Kästen den entsprechenden Ausschleuser passiert haben, diese Kästen über die Pufferbahn im Kreis geführt werden, bis sie wieder an den entsprechenden Ausschleuser 110 gelangen. Alsdann wird mit den restlichen Kästen eine Palettenlage in der entsprechenden Palettieranlage aufgefüllt.

Wenn beispielsweise von einer Sorte A eines Getränkekastens eine Vielzahl von Kästen auf der Zuführbahn zugeführt werden, so können entsprechend mehrere Ausschleuser für diese Sorte an Kästen die Zuständigkeit zum Ausschleusen erhalten. Selbst dann, wenn die ankommende Anzahl an Kästen die Kapazität sämtlicher Ausschleuser übersteigt, besteht insofern immer noch die Möglichkeit, die überschüssigen Kästen auf den Pufferbahnen 112 zwischen zu speichern.

Erkennbar zeichnet sich die erfindungsgemäße Palettieranlage durch eine extrem hohe Flexibilität und eine hohe Kapazität aus, was insbesondere dadurch erreicht wird, dass die Palettierung lagenweise vorgenommen wird, d. h. dass nicht wie beim bekannten Stand der Technik zunächst abgewartet wird bis eine Palette vollständig mit Kästen belegbar ist, sondern auch eine Teilbelegung im Rahmen einer Palettenlage möglich ist, was eine erhebliche Menge an Stauraum spart. Hierdurch ergibt sich allerdings auch eine erhöhte Flexibilität der Anlage, da durch die entsprechende Palettierstation nicht nur eine Sorte an Kästen palettiert werden kann, sondern entsprechend der Anzahl der Palettenplätze in dem Palettenbeladeplatz 130 eine entsprechende Anzahl von Kästensorten palettiert werden kann.

Die Kästen, die noch nicht palettiert werden, verlassen die Palettieranlage über die Abführbahn 160 nach dem letzten Ausschleuser 111.

### Bezugszeichenliste:

- 1: Zuführbahn
- 2: Erkennungseinrichtung
- 5, 6, 7: Ausschleuser
- 10, 11, 12: Kamm- oder Staubahn
- 20: Palettierstation
- 21: Verbindungsbahn
- 100: Zuführbahn
- 101: Pfeil
- 105: Erkennungseinrichtung
- 110: Ausschleuser (Ausschleusbahn)
- 111: Ausschleuser (Pufferbahn)
- 112: Pufferbahn
- 115: Ausschleusbahn
- 117: Einschleuser
- 120: Palettierstation
- 125: Gruppierstation
- 126: Auflaufbahn
- 127: Verschiebeeinrichtung
- 128: Gruppiertisch
- 130: Palettenbeladeplatz
- 140: Palettenspeicher
- 150: Palettierkopf
- 160: Abführbahn

## Patentansprüche

1. Verfahren zum Betrieb einer Palettieranlage für Getränkekästen, umfassend mindestens eine Zuführbahn (100), wobei die Zuführbahn (100) mindestens eine Erkennungseinrichtung (105) für die Getränkekästen aufweist, wobei die Zuführbahn (100) in Reihe angeordnet mehrere Ausschleuser (110) aufweist, wobei sich an jeden Ausschleuser (110) eine Ausschleusbahn (115) anschließt, die zu einer Palettierstation (120) führt, wo durch einen Palettierkopf (150) die lagenweise Beladung einer Palette mit Getränkekästen erfolgt, wobei die mindestens eine Zuführbahn (100) mit mindestens einer Pufferbahn (112) im Kreislauf verbunden ist, wobei die Anbindung der mindestens einen Pufferbahn (112) an die Zuführbahn (100) in Transportrichtung der Getränkekästen einerseits vor der Erkennungseinrichtung (105) erfolgt und andererseits nach dem letzten Ausschleuser (110) mit der Ausschleusbahn (115) zur Palettierstation (120), wobei sich an die Zuführbahn (100) eine Abführbahn (160) für Getränkekästen anschließt, wobei bei einer Mehrzahl von auf der Zuführbahn ankommenden Getränkekästen unterschiedlicher Sorten durch die Erkennungseinrichtung (105) die Erkennung der einzelnen Getränkekästen erfolgt, und in der mit einem Speicher versehenen Rechnereinheit der Erkennungseinrichtung die Reihenfolge und ggf. auch der Abstand der Kästen zueinander abgespeichert wird, so dass bekannt ist, welche Kästen sich zu welchem Zeitpunkt, wo auf zumindest der Zuführbahn (100) und der Pufferbahn (112) befinden, wobei die Ausschleuser (110) mit der Rechnereinheit der Erkennungseinrichtung (105) in Verbindung stehen, um bei entsprechendem Signal durch die Rechnereinheit den gewünschten Kasten auszuschleusen, wobei der Ausschleusvorgang dann erfolgt, wenn durch die Erkennungseinrichtung (105) mindestens die Anzahl von Kästen einer Sorte auf der Zuführ- und der Pufferbahn (112) erkannt worden ist, die erforderlich ist, um eine Palettenlage zu bilden.

2. Verfahren nach Anspruch 1,
**dadurch gekennzeichnet,**
**dass** nur die Kästen der Pufferbahn (112) zugeführt werden, die palettiert werden.

3. Verfahren nach einem der Ansprüche 1 oder 2,
**dadurch gekennzeichnet**
**dass** der Transport der Kästen auf der mindestens einen Zuführbahn (100) als wegsynchroner Signaltransport erfolgt.

4. Verfahren nach einem der voranstehenden Ansprüche,
**dadurch gekennzeichnet**
**dass** das Wiedereinschleusen der Kästen von der mindestens einen Pufferbahn (112) auf die Zuführbahn (100) durch den Einschleuser (117) vorgenommen wird, der mit der Erkennungseinrichtung (105) in datentechnischer Verbindung steht, wobei der Einschleusvorgang dann erfolgt, wenn die Anzahl der hinter dem Einschleuser (117) anstehenden unterschiedlichen Kästen in Bezug auf mindestens eine Kastensorte zusammen mit den von der Erkennungseinrichtung (105) auf der Zuführbahn (100) zugeführten und erkannten Kästen derselben Kastensorte mindestens der Anzahl der Kästen einer Palettenlage entspricht.

5. Verfahren nach einem der voranstehenden Ansprüche,
**dadurch gekennzeichnet,**
**dass** die Erkennungseinrichtung (105) zur Erkennung der Getränkekästen eine Rechnereinheit mit Speicher zur Verwaltung der Getränkekästen in der Palettieranlage aufweist.

6. Verfahren nach einem der voranstehenden Ansprüche,
**dadurch gekennzeichnet,**
**dass** die Palettierstation (120) eine Gruppierstation (125) zur lagenweise Gruppierung von Getränkekästen im Bereich des Palettierkopfes (150) aufweist.

7. Verfahren nach Anspruch 6,
**dadurch gekennzeichnet,**
**dass** die Gruppierstation (125) eine sich an die Ausschleusbahn (115) anschließende Auflaufbahn (126) sowie einen Gruppiertisch (128) umfasst.

8. Verfahren nach Anspruch 7,
**dadurch gekennzeichnet,**
**dass** der Gruppiertisch (128) der lagenweise Aufnahme von Getränkekästen dient.

9. Verfahren nach Anspruch 7 oder Anspruch 8,
**dadurch gekennzeichnet,**
**dass** im Bereich der Auflaufbahn (126) eine Verschiebeeinrichtung (127) zum Verschieben der Getränkekästen von der Auflaufbahn (126) auf den Gruppiertisch (128) angeordnet ist.

10. Verfahren nach einem der Ansprüche 6 bis 9,
**dadurch gekennzeichnet,**
**dass** der Gruppierstation (125) mindestens ein Palettenbeladeplatz (130) zugeordnet ist.

11. Verfahren nach Anspruch 10,
**dadurch gekennzeichnet,**
**dass** dem Palettenbeladeplatz (130) ein Palettenspeicher (140) zugeordnet ist.

12. Verfahren nach einem der voranstehenden Ansprüche,
**dadurch gekennzeichnet,**
**dass** die Pufferbahn (112) im Wesentlichen parallel zur Zuführbahn (100) aber quer zu den Ausschleusbahnen (105) verläuft.

13. Verfahren nach einem der voranstehenden Ansprüche,
**dadurch gekennzeichnet,**
**dass** die Erkennungseinrichtung (105) mit den Ausschleusern (110, 111) in datentechnischer Verbindung steht.

14. Verfahren nach einem der voranstehenden Ansprüche,
**dadurch gekennzeichnet,**
**dass** im Übergang von der Pufferbahn (112) zur Zuführbahn (100) in Transportrichtung der Kästen gesehen vor der Erkennungseinrichtung (105) ein Einschleuser (117) zum Einschleusen der Kästen von der Pufferbahn (112) auf die Zuführbahn (100) angeordnet ist, wobei der Einschleuser (117) mit der Erkennungseinrichtung (105) in datentechnischer Verbindung steht.

## Claims

1. A method for operating a palletisation facility for beverage crates, comprising at least one feed conveyor (100), wherein the feed conveyor (100) has at least one recognition device (105) for the beverage crates, wherein the feed conveyor (100) has several diverters (110) disposed in a row, wherein a diversion conveyor (115) is connected to each diverter (110), said diversion conveyor leading to a palletisation station (120) where a pallet is loaded in tiers with beverage crates by a palletising head (150), wherein the at least one feed conveyor (100) is connected with at least one buffer conveyor (112) to form a circuit, wherein the connection of the at least one buffer conveyor (112) to the feed conveyor (100) is carried out, in the direction of transport of the beverage crates, on the one hand upstream of the recognition device (105) and on the other hand downstream of the last diverter (110) with the diversion conveyor (115) leading to the palletisation station (120), wherein a discharge conveyor (160) for beverage crates is connected to the feed conveyor (100), wherein when a plurality of beverage crates of different types arrives on the feed conveyor, the individual beverage crates are recognized by the recognition device (105) and the order and, if applicable, the distance between the crates is stored in the computer unit equipped with a memory, so that the position of each crate at any point in time on at least the feed conveyor (100) and the buffer conveyor (112) is known, wherein the diverters (110) are connected with the computer unit of the recognition device (105) in order to divert the desired crate at a corresponding signal from the computer unit, wherein the diversion process takes place when the recognition device (105) has recognized at least the number of crates of one type on the feed and buffer conveyors (112) that is required to form a pallet layer.

2. The method according to claim 1,
**characterized in that**
only the crates that are to be palletised are supplied to the buffer conveyor (112).

3. The method according to one of the claims 1 or 2,
**characterized in that**
the transport of the crates on the at least one feed conveyor (100) takes place as a path-synchronous signal transport.

4. The method according to one of the afore-mentioned claims,
**characterized in that**
the crates are fed back from the at least one buffer conveyor (112) onto the feed conveyor (100) by the merge (117), which has a data link with the recognition device (105), wherein the feeding process takes place when, with regard to at least one type of crates, the number of different crates lined up behind the merge (117) together with the crates of the same type of crates recognised by the recognition device (105) and supplied on the feed conveyor (100) corresponds at least to the number of crates of one pallet layer.

5. The method according to one of the afore-mentioned claims,
**characterized in that**
the recognition device (105) for recognizing the beverage crates has a computer unit with a memory for managing the beverage crates in the palletisation facility.

6. The method according to one of the afore-mentioned claims,
**characterized in that**,
the palletisation station (120) has a grouping station (125) for grouping beverage crates in tiers in the area of the palletising head (150).

7. The method according to claim 6,
**characterized in that**
the grouping station (125) comprises an accumulation conveyor (126) connected to the diversion conveyor (115) and a grouping table (128).

8. The method according to claim 7,
**characterized in that**
the grouping table (128) serves to receive beverage crates in layers.

9. The method according to claim 7 or claim 8,
**characterized in that**
a displacement device (127) is disposed in the area of the accumulation conveyor (126) for displacing the beverage crates from the accumulation conveyor (126) onto the grouping table (128).

10. The method according to one of the claims 6 to 9,
**characterized in that**
at least one pallet loading site (130) is attributed to the grouping station (125).

11. The method according to claim 10,
**characterized in that**
a pallet storage area (140) is attributed to the pallet loading site (130).

12. The method according to one of the afore-mentioned claims,
**characterized in that**
the buffer conveyor (112) runs substantially parallel to the feed conveyor (100) but perpendicularly to the diversion conveyors (105).

13. The method according to one of the afore-mentioned claims,
**characterized in that**
the recognition device (105) has a data link with the diverters (110, 111).

14. The method according to one of the afore-mentioned claims,
**characterized in that**
a merge (117) for feeding the crates from the buffer conveyor (112) onto the feed conveyor (100) is disposed upstream of the recognition device (105), when seen in the direction of transport, in the transition from the buffer conveyor (112) to the feed conveyor (100), wherein the merge (117) has a data link with the recognition device (105).

## Revendications

1. Procédé de fonctionnement d'une installation de palettisation de caisses de boissons, comportant au moins une voie d'amenée (100), dans lequel la voie d'amenée (100) comporte au moins une unité de reconnaissance (105) des caisses de boissons, dans lequel la voie d'amenée (100) comporte plusieurs aiguillages (110) disposés en ligne, dans lequel à chaque aiguillage (110) est connecté une voie de dérivation (115), qui conduit à une station de palettisation (120) dans laquelle est effectué le chargement par couches d'une palette avec des caisses de boissons, au moyen d'une tête de palettisation (150), dans lequel ladite au moins une voie d'amenée (100) est couplée avec au moins une voie tampon (112) en circuit fermé, dans lequel la liaison de ladite au moins une voie tampon (112) avec la voie d'amenée (100) s'effectue d'une part avant ladite unité de reconnaissance (105) et d'autre part après les derniers aiguillages (110) connectés à la voie de dérivation (115) vers la station de palettisation (120), dans lequel une voie d'évacuation (160) est connectée à la voie d'amenée (100) de caisses de boissons, dans lequel parmi une pluralité de variétés de caisses de boissons provenant de la voie d'amenée, l'unité de reconnaissance (105) effectue l'identification des variétés individuelles de boissons, et dans lequel l'ordre de progression et, le cas échéant l'espacement entre les caisses est mémorisé au moyen d'une unité de calcul pourvue d'une mémoire, de l'unité de reconnaissance, de telle manière que l'on connaisse quelles caisses se trouvent à quel moment et à quel emplacement au moins sur voie d'amenée (100) et sur la voie tampon (112), dans lequel les aiguillages (110) sont en contact avec l'unité de calcul de l'unité de reconnaissance (105), pour que, lors de l'émission d'un signal par l'unité de calcul, la caisse souhaitée soit déviée, de sorte que le processus de dérivation soit poursuivi lorsque, au moyen de l'unité de reconnaissance (105) le nombre de caisses d'une même variété, nécessaire pour créer la charge d'une palette, a été détecté sur la voie tampon (102).

2. Procédé selon la revendication 1,
**caractérisé en ce que**,
seules les caisses qui sont amenées sur la voie tampon (112) sont palettisées.

3. Procédé selon les revendications 1 ou 2,
**caractérisé en ce que,**
le transport des caisses sur ladite au moins une voie d'amenée (100) est effectué comme transport selon un signal de cheminement synchronisé.

4. Procédé selon l'une des revendications précédentes,
**caractérisé en ce que,**
la reinsertion de caisses provenant de ladite au moins une voie tampon (112) sur la voie d'amenée (100) est effectuée par l'aiguillage d'insertion (117) qui est en liaison de communication et d'échange de données avec l'unité de reconnaissance (105), dans lequel le processus de reinsertion s'opère lorsque le nombre de caisses différentes présentes derrière l'aiguillage d'insertion (117), concernant au moins une sorte de caisses, en complément des caisses de la même sorte reconnues par l'unité de reconnaissance (105) et transportées par la voie d'amenée (100), correspond au moins au nombre de caisses d'une palette.

5. Procédé selon l'une des revendications précédentes,
**caractérisé en ce que,**
pour identifier les caisses de boissons, l'unité de reconnaissance (105) comporte une unité de calcul avec mémoire pour gérer les caisses de boissons dans l'installation de palettisation.

6. Procédé selon l'une des revendications précédentes,
**caractérisé en ce que,**
la station de palettisation (120) comporte une unité de groupage (125) pour grouper par couches les caisses de boissons dans le secteur de la tête de palettisation (150).

7. Procédé selon la revendication 6,
**caractérisé en ce que,**
l'unite de groupage (125) comporte une voie élévatrice (126) dans le prolongement de la voie de dérivation (115) ainsi qu'une table de regroupement (128).

8. Procédé selon la revendication 7,
**caractérisé en ce que,**
la table de regroupement (128) permet de réceptionner les caisses de boissons dans le sens de la longueur.

9. Procédé selon les revendications 7 ou 8,
**caractérisé en ce que,**
dans le secteur de la voie élévatrice (126) est prévue une installation de décalage (127) pour décaler les caisses de boissons de la voie élévatrice (126) sur la table de regroupement (128).

10. Procédé selon les revendications 6 à 9,
**caractérisé en ce que,**
au moins une place de chargement de palettes (130) est affecté à l'unite de groupage (125).

11. Procédé selon la revendication 10,
**caractérisé en ce que,**
la station de groupage (130) comporte un stockeur de palettes (140).

12. Procédé selon l'une des revendications précédentes,
**caractérisé en ce que,**
la voie tampon (112) est en substance parallèle à la voie d'amenée (100), mais transversale par rapport à la voie de dérivation (115).

13. Procédé selon l'une des revendications précédentes,
**caractérisé en ce que,**
l'unité de reconnaissance (105) se trouve en communication d'échange de données techniques avec les aiguillages (110, 111).

14. Procédé selon l'une des revendications précédentes,
**caractérisé en ce que,**
lors du transfert de la voie tampon (112) sur la voie d'amenée (100), vu dans la direction du transport des caisses et devant l'unité de reconnaissance (105), un aiguillage (117) est agencé pour dévier les caisses de la voie tampon (112) sur la voie d'amenée (100), dans lequel l'aiguillage (117) se trouve en communication d'échange de données techniques avec l'unité de reconnaissance (105).
